(19) Europäisches Patentamt
European Patent Office
Office européen des brevets

(11) **EP 4 317 070 A1**

(12) **EUROPEAN PATENT APPLICATION**
published in accordance with Art. 153(4) EPC

(43) Date of publication:
**07.02.2024 Bulletin 2024/06**

(21) Application number: **22781183.3**

(22) Date of filing: **30.03.2022**

(51) International Patent Classification (IPC):
*C01G 23/053* (2006.01)    *C09C 1/36* (2006.01)
*C09C 3/06* (2006.01)    *C09D 4/00* (2006.01)
*C09D 17/00* (2006.01)    *C09D 7/61* (2018.01)

(52) Cooperative Patent Classification (CPC):
**C01G 23/053; C09C 1/36; C09C 3/06; C09D 4/00;
C09D 7/61; C09D 17/00**

(86) International application number:
**PCT/JP2022/016293**

(87) International publication number:
**WO 2022/210973 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021061695**

(71) Applicant: **JGC Catalysts and Chemicals Ltd.
Kawasaki-shi, Kanagawa 212-0013 (JP)**

(72) Inventors:
• **HORI, Yuko**
  **Kitakyushu-shi, Fukuoka 808-0027 (JP)**
• **ARAKANE, Hirotada**
  **Kitakyushu-shi, Fukuoka 808-0027 (JP)**
• **MURAGUCHI, Ryo**
  **Kitakyushu-shi, Fukuoka 808-0027 (JP)**

(74) Representative: **Dennemeyer & Associates S.A.
Postfach 70 04 25
81304 München (DE)**

(54) **PARTICLES HAVING RUTILE CRYSTAL STRUCTURE, PRODUCTION METHOD THEREFOR, AND PRODUCTION METHOD FOR PARTICLE DISPERSION LIQUID, COATING LIQUID, AND SUBSTRATE WITH FILM**

(57)    The present invention relates to particles having a rutile-type crystal structure. The particles have a crystallite diameter of 7 nm or more and contains 90% by weight or more of titanium oxide in terms of $TiO_2$ and 0.2 to 10% by weight of tin oxide in terms of $SnO_2$. Such particles are easily dispersed in a solvent and have a high refractive index.

**EP 4 317 070 A1**

**Description**

TECHNICAL FIELD

The present invention relates to particles having a rutile-type crystal structure, a method for producing the particles, and others.

BACKGROUND ART

Conventionally, a film having a high refractive index is formed on a substrate with a coating liquid that contains oxide particles having a high refractive index. Such a film is used for, for example, glasses, lenses, touch panels of smartphones, and others.

In order to form a film having a high refractive index, the refractive index of particles is preferably high. For example, titanium oxide is known to have a high refractive index. In particular, titanium oxide having a rutile-type crystal structure has a high refractive index (see, for example, JP-A-2010-42947). Titanium oxide that contains tin oxide is likely to form a rutile-type crystal structure.

It is also known that titanium oxide particles that contain an inorganic oxide such as silica are easily dispersed (see, for example, WO 2018/181241 A).

SUMMARY OF INVENTION

PROBLEMS TO BE SOLVED BY INVENTION

In Patent Documents 1 and 2, rutile-type composite particles that contain titanium oxide and silica are used, and thus the titanium oxide content ratio of the particles is low. Therefore, the refractive index of the film decreases.

Therefore, an object of the present invention is to provide particles that are easily dispersed in a solvent and have a high refractive index.

SOLUTION TO PROBLEMS

Therefore, the present invention is particles having a rutile-type crystal structure, in which the particles have a crystallite diameter of 7 nm or more. Such particles are easily dispersed in a solvent. Here, the particles contain 90% by weight or more of titanium oxide in terms of $TiO_2$ and 0.2 to 10% by weight of tin oxide in terms of $SnO_2$. Such particles have a high refractive index.

Also, tin is preferably not detected on the particle surface.

The particle diameter when the particles are dispersed in a solvent is preferably 100 nm or less.

A method for producing particles having a rutile-type crystal structure includes: a step of preparing a titanium-containing-compound-dispersion; a step of preparing a core-particles-dispersion having a rutile-type crystal structure; a step of mixing the titanium-containing-compound-dispersion and the core-particles-dispersion to prepare a mixed liquid; and a step of crystal-growing the core particles by adjusting the mixed liquid to 80°C or higher. The core particles contain titanium oxide and tin oxide.

The present invention is particles having a rutile-type crystal structure (hereinafter, simply referred to as particles), in which the particles have a crystallite diameter of 7 nm or more. Accordingly, the particles are easily dispersed in a solvent even if the particles contain 90% by weight or more of titanium oxide in terms of $TiO_2$ and 0.2 to 10% by weight of tin oxide in terms of $SnO_2$. In particular, such particles are easily dispersed in water in a stable manner even when the particle concentration is 20% by weight or more. Therefore, the particles are industrially easy to handle.

The larger the crystallite diameter of the particles, the smaller the specific surface area of the particles. Therefore, the particles are easily dispersed in a solvent. In addition, the larger the crystallite diameter of the particles, the smaller the specific surface area, and thus the higher the density of the particles. Therefore, the refractive index of the particles (hereinafter, referred to as a particle refractive index) increases. The refractive index of a film that contains such particles (hereinafter, referred to as a film refractive index) increases. The crystallite diameter of the particles is preferably 9 nm or more and more preferably 12 nm or more.

The higher the titanium oxide content ratio of the particles, the higher the particle refractive index. Therefore, the content ratio is 90% by weight or more in terms of $TiO_2$. The content ratio is preferably 92% by weight or more and more preferably 95% by weight or more in terms of $TiO_2$. When the particles contain tin oxide, the crystal structure of the particles is likely to become a rutile-type. However, the tin oxide content ratio of the particles is preferably low from the viewpoint of the particle refractive index. Therefore, the tin oxide content ratio is 10% by weight or less in terms of $SnO_2$. This tin oxide content ratio is more preferably 5% by weight or less in terms of $SnO_2$.

Also, when tin is not detected on the particle surface, that is, when tin oxide is not present on the particle surface, the proportion of titanium oxide on the particle surface side (hereinafter, referred to as a shell) is high. Therefore, the titanium oxide content ratio is likely to be high as the entirety of particles. On the other hand, when the central side (hereinafter, referred to as a core) of the particles contains tin oxide, the particles are likely to have a rutile-type crystal structure. That is, when the core contains tin oxide in an amount sufficient for the crystal structure of the particles to become a rutile type, the shell may not contain tin oxide. The lower the proportion of tin in the core, the higher the titanium oxide content ratio of the particles can be. Therefore, the proportion of tin in the core is preferably 6.5 atomic% (at%) or less. Here, the proportion of tin in the core is the number of atoms of tin relative to the total number of atoms of titanium and tin.

When the ratio of the average value of the minor axes of the particles to the crystallite diameter (average value of minor axes/crystallite diameter) is close to 1, the crystallite diameter is close to the minor axis of the particles. As a result, the density of the particles increases. Therefore, this ratio is preferably 0.8 to 3.0, more preferably 0.8 to 2.0, and further preferably 0.8 to 1.5.

Also, the smaller the average value of the aspect ratios of the particles (hereinafter, referred to as an aspect ratio) is, the more easily the particles are dispersed in a solvent and a binder. Therefore, the haze of the film is likely to decrease. Also, the smaller the aspect ratio, the smaller the specific surface area of the particles. Therefore, the aspect ratio is preferably 1.0 to 2.3. In particular, when the crystallite diameter is 7 nm or more, and the aspect ratio is 2.3 or less, the particles are easily dispersed in a solvent. The aspect ratio is preferably 1 to 2.1, more preferably 1 to 1.9, further preferably 1 to 1.6, and still further preferably 1 to 1.5. In particular, the aspect ratio is preferably 1 to 1.9 when the crystallite diameter is 10 nm or more, the aspect ratio is preferably 1 to 1.8 when the crystallite diameter is 12.5 nm or more, and the aspect ratio is preferably 1 to 1.5 when the crystallite diameter is 17 nm or more. The aspect ratio is a ratio between the average value of minor axes and the average value of major axes of particles.

When the particles are dispersed in a solvent, the average particle diameter (hereinafter, referred to as a dispersed particle diameter) of the particles is preferably 100 nm or less. When a film is formed with particles of this size, the transparency of the film is enhanced. In addition, the particles are less likely to settle. The dispersed particle diameter is more preferably 80 nm or less. On the other hand, when the dispersed particle diameter is 20 nm or more, the particles are easily dispersed in a solvent and a binder. In particular, it is preferable that the crystallite diameter be 7 nm or more, and the dispersed particle diameter be 20 nm or more.

The particle refractive index varies depending on factors such as the composition, density, crystal structure, and crystallite diameter of the particles. This refractive index is preferably 1.95 or more, more preferably 2.05 or more, and further preferably 2.10 or more. It is difficult to obtain particles having a refractive index of 2.8 or more.

Hereinafter, a particles-dispersion will be described. A particles-dispersion contains the above-described particles and a solvent. When the solvent is water, 20% by weight or more of the particles can be stably dispersed in water. On the other hand, in order for the above-described particles to be dispersed in an organic solvent, the particle surface needs to be treated with a surface treatment agent. A part of the surface treatment agent may be dispersed in an organic solvent without being bound to the particles. When the solvent is an organic solvent (in the case of an organic solvent dispersion liquid), two or more types of surface treatment agents may be contained. Examples of the surface treatment agent include a silicon compound, a titanium compound, a zirconium compound, and an aluminum compound. Among them, the silicon compound is industrially easy to handle.

When an organic solvent dispersion liquid contains a surface treatment agent having an alkoxy group, the alkoxy group is hydrolyzed. In the dispersion liquid, the hydrolyzed alkoxy group and the OH group on the particle surface are subjected to dehydration condensation reaction (hereinafter, referred to as chemical bonding). Therefore, the particles are easily dispersed in an organic solvent. Furthermore, when the organic solvent dispersion liquid contains a catalyst, water, and the like, the hydrolysis reaction of the alkoxy group is promoted. Accordingly, chemical bonding is promoted.

An alkyl group is bonded to an oxygen atom of the alkoxy group. The smaller the molecular weight of this alkyl group, the faster the hydrolysis reaction of the alkoxy group. Therefore, the alkyl group is preferably a methyl group or an ethyl group.

An example of the surface treatment agent is the molecule of General Formula $(RO)_nM(X)_{4-n}$. n is an integer of 1 to 4. M represents any of Si, Ti, and Zr. When M is Si, it is industrially easy to handle. When there is one M in the molecule, it is easy to control the reaction rate and the like of this molecule, and thus it is industrially easy to handle. X is a hydrocarbon group. For example, X represents Me, Et, Pr, $-(CH_2)_3OC(=O)C(CH_3)(=CH_2)$, $-(CH_2)_3OC(=O)CH(=CH_2)$, and $-CH=CH_2$. R is a hydrocarbon group. When M is Si, the reaction rate or the like of this molecule can be easily controlled when R is Me or Et. Therefore, it is industrially easy to handle.

The larger the number of alkoxy groups in the surface treatment agent is, the more easily the surface treatment agent is chemically bonded to the particle surface. Also, when the surface treatment agent having a large number of alkoxy groups is bonded to the particle surface, the number of alkoxy groups on the particle surface increases. Therefore, the particles are easily dispersed in alcohol. The surface treatment agent preferably has three to four alkoxy groups. When the solvent is alcohol, the surface treatment agent preferably has four alkoxy groups. Hereinafter, the surface treatment agent having four alkoxy groups is referred to as a first surface treatment agent.

When the dispersion liquid contains the first surface treatment agent in an amount of 20 to 85 parts by mass (3 to 30 parts by mass in terms of oxide {in terms of $SiO_2$ when the surface treatment agent is a silicon compound}) relative to 100 parts by mass of the particles, the particles are easily dispersed in alcohol. It is noted that the amount of the surface treatment agent can be reduced as the crystallite diameter of the particles is larger.

When the particles are treated with a surface treatment agent having a hydrocarbon group (hereinafter, referred to as a second surface treatment agent), the particles are easily dispersed in an organic solvent having higher hydrophobicity than alcohol (hereinafter, referred to as a hydrophobic solvent). The particles are more easily dispersed in the hydrophobic solvent when the second surface treatment agent has three alkoxy groups and one hydrocarbon group. The second surface treatment agent is different from the first surface treatment agent. The first surface treatment agent does not have a hydrocarbon group. The hydrocarbon group is not an alkyl group bonded to an oxygen atom of the alkoxy group.

Examples of the hydrophobic solvent include organic solvents having at least one of an ester bond, an ether bond, and a ketone group. A UV curable binder is easily dissolved in the organic solvent having such a bond or functional group. Among such organic solvents, polyethylene glycol monomethyl ether acetate (PGMEA) is preferable.

When the particle surface is treated with the first surface treatment agent and the second surface treatment agent, the particles are easily dispersed in the hydrophobic solvent and the UV curable binder.

Also, when the surface treatment agent having a (meth)acrylate group is bonded to the particles, the particles can be bonded to a UV curable binder by UV irradiation. As a result, the film becomes dense, and the film refractive index increases. Therefore, it is preferable that the hydrocarbon group of the second surface treatment agent have a (meth)acrylate group, or the hydrocarbon group of the second surface treatment agent be a (meth)acrylate group.

When the solvent is water, a denser layer is formed on the particle surface by the surface treatment agent when the particle surface is treated with silica. Such particles are easily dispersed in an organic solvent (particularly alcohol) even when the amount of the surface treatment agent is small. That is, with such particles, the solvent of the dispersion liquid can be easily changed from water to an organic solvent. The aqueous dispersion liquid of such particles has an isoelectric point of 3 or less (this is the isoelectric point when the solid content concentration is 0.5% by mass). On the other hand, when the particle surface is not treated with silica, the isoelectric point of the aqueous dispersion liquid of the particles is in the range of 4 to 6. When the particle surface is treated with silica and the surface treatment agent, a crystal structure other than a rutile type may be observed.

When the solvent is water, the particle surface is preferably treated with silica in an amount of 2 parts by mass or more in terms of $SiO_2$ relative to 100 parts by mass of the particles. That is, it is preferable that the particles have a silica content of 2 parts by mass or more relative to 100 parts by mass of the particles, and the aqueous dispersion liquid have an isoelectric point of 3 or less. Such particles are easily dispersed in an organic solvent (particularly in alcohol) even when the amount of the surface treatment agent is small. The silica content is more preferably 4 parts by mass or more. On the other hand, when the silica content is excessively large, the particle refractive index decreases. Therefore, the silica content is preferably 20 parts by mass or less relative to 100 parts by mass of the particles. When the particle surface is treated with silica in an amount of 2 parts by mass or more relative to 100 parts by mass of the particles, the particle surface is preferably treated with the first surface treatment agent in an amount of 10 to 30 parts by mass (3 to 10 parts by mass in terms of oxide {in terms of $SiO_2$ when the surface treatment agent is a silicon compound}) relative to 100 parts by mass of the particles.

Hereinafter, a coating liquid will be described. The coating liquid contains particles, a surface treatment agent, a binder, and an organic solvent. By forming a film with the coating liquid containing the above-described particles, the film refractive index is increased. With the coating liquid that contains a binder, a film can be formed. When a part of the surface treatment agent functions as a binder, the binder may not be contained. Examples of the binder include a monomer or an oligomer before polymerization and a polymer after polymerization of the monomer or the oligomer. Among them, a monomer or an oligomer is preferable. In the case of curing the film, the film is likely to become denser when the coating liquid that contains a monomer or an oligomer is used than when the coating liquid that contains a polymer is used. Since the refractive index of the adamantane skeleton is high, the film refractive index increases when an adamantane derivative is used as the monomer or the oligomer. The organic solvent can be appropriately selected depending on the type of the binder to be added when the coating liquid is prepared.

The higher the solid content concentration of the coating liquid is, the more easily a thick film is formed. In addition, the coating liquid is industrially easy to handle. Therefore, the concentration is preferably 10% by weight or more and more preferably 20% by weight or more. On the other hand, when the concentration is 50% by weight or less, the viscosity of the coating liquid is likely to decrease. This concentration is preferably 30% by weight or less.

When the boiling point of the organic solvent is 80°C or higher, the coating liquid can be slowly dried, and thus the film becomes dense. The boiling point is more preferably 100°C or higher. On the other hand, when this boiling point is 200 °C or lower, the organic solvent hardly remains, and thus the film easily shrinks. Therefore, the hardness of the film increases. This boiling point is more preferably 180°C or lower.

Hereinafter, a method for producing particles will be described. First, a titanium-containing-compound-dispersion and a core-particles-dispersion having a rutile-type crystal structure (hereinafter, referred to as core particles) are prepared <preparation step>. Thereafter, the titanium-containing-compound-dispersion and the core-particles-dispersion are mixed to prepare a mixed liquid <mixing step>. The mixed liquid is adjusted to 80°C or higher to grow crystals from the core particles <crystal growth step>. Crystal growth from the core particles decreases the tin oxide content ratio of the particles. Therefore, the titanium oxide content ratio of the particles becomes relatively high. In addition, the crystallite diameter increases. After the crystal growth step, the core particles serve as the core of the particles, and the titanium-containing compound serves as the shell of the particles. Hereinafter, each step will be described in detail.

<Preparation Step>

The core particles as a starting point of crystal growth contain tin oxide and have a rutile-type crystal structure. Even if the titanium-containing compound does not contain tin oxide, the particles form a rutile-type crystal structure when such core particles are crystal-grown. Here, when the titanium-containing compound does not contain tin oxide, the particle refractive index increases.

When the core particles contain tin oxide, the core particles are likely to become a rutile type. The tin oxide content ratio of the core particles is an amount that allows the core particles to have a rutile-type crystal structure. If the crystal structure of the core particles is other than a rutile-type, the particles come to have a mixed crystal structure or a crystal structure other than a rutile-type. The crystallite diameter of the core particles is a size that allows the particles to be dispersed in a solvent. When the solvent is water, the core particles are easily dispersed.

The titanium-containing compound may contain an oxide or a hydroxide of titanium. After the titanium compound is neutralized to obtain a gel, the gel is defibrated to obtain a dispersion liquid of the titanium-containing compound. The titanium compound is not particularly limited as long as it is water-soluble. Specific examples of the titanium compound include titanium tetrachloride, titanium trichloride, titanium sulfate, titanyl sulfate, and titanium hydride. The generated gel contains a hydroxide of titanium. The salt in the gel lowers the film refractive index and the dispersibility of particles. Therefore, the gel is preferably washed with water. When the gel is defibrated using hydrogen peroxide, the core particles are easily crystal-grown in a rutile-type state. When the gel is added with hydrogen peroxide and thereafter brought into a state of 50°C to 100°C, the gel is easily defibrated.

<Mixing Step>

In this step, the titanium-containing-compound-dispersion and the core-particles-dispersion are mixed to prepare a mixed solution. When the weight ratio of the titanium-containing compound to the core particles (amount of titanium-containing compound/amount of core particles) is 7 or less, crystals other than a rutile-type are unlikely to be generated. Here, the weights of the solid content and the core particles are weights obtained when the amounts of Ti and Sn in the raw material are converted into $TiO_2$ and $SnO_2$, respectively. The titanium-containing compound is the solid content of the titanium-containing-compound-dispersion.

<Crystal growth step>

In this step, the mixed liquid is adjusted to 80°C or higher to grow crystals from the core particles. When the mixed liquid is lower than 80°C, the speed of crystal growth is slow, and thus the crystallite diameter of the particles decreases. Furthermore, since the reaction becomes insufficient, a yellow titanium-containing compound remains. For adjusting the mixed solution to 80°C or higher, the mixed solution is preferably subjected to hydrothermal synthesis (autoclave treatment). The higher the temperature of hydrothermal synthesis, the larger the crystallite diameter. Therefore, this temperature is preferably 100°C or higher and further preferably 130°C or higher. On the other hand, when this temperature is 300°C or lower, the production efficiency increases. This temperature is more preferably 250°C. In addition, the longer the hydrothermal synthesis time, the higher the density of the particles. Therefore, the time is preferably 1 hour or more, more preferably 5 hours or more, and further preferably 10 hours or more. On the other hand, when the time is 50 hours or less, the production efficiency increases. The time is more preferably 40 hours or less and further preferably 20 hours or less.

When crystal growth is repeated multiple times, the titanium oxide content ratio of the particles increases. In addition, the crystallite diameter and the particle diameter increase. Also, the aspect ratio decreases. Crystal growth is preferably repeated 2 to 5 times. When crystal growth is repeated 2 to 3 times, the haze of the film of the particles is low. Also, in this case, the film refractive index is high. When crystal growth is repeated 4 to 5 times, the refractive index of the particles is higher than that when repeated 2 to 3 times. On the other hand, when crystal growth is repeated 4 to 5 times, the haze of the film is higher than that when repeated 2 to 3 times. In the second or subsequent crystal growth, the crystal-grown particles were used as the core particles to perform the mixing step and the crystal growth step.

The particle surface is preferably treated with silica before treating the particle surface with the surface treatment agent. Specifically, silica is added to an aqueous dispersion liquid of the crystal-grown particles, and then the aqueous dispersion is hydrothermally synthesized. Accordingly, a layer of silica is densely formed on the particle surface. When the specific surface area of silica is 100 to 600 $m^2$/g, fine particles and coarse particles are hardly generated. The specific surface area of silica is more preferably 200 to 550 $m^2$/g and further preferably 300 to 550 $m^2$/g. The lower the solid content concentration of the aqueous dispersion liquid in hydrothermal synthesis, the denser the layer of silica formed on the particle surface. Therefore, in hydrothermal synthesis, this solid content concentration is preferably 5% by weight or less, more preferably 3% by weight or less, and further preferably 1.5% by weight or less. The higher the temperature of hydrothermal synthesis in hydrothermal synthesis, the denser the layer of silica formed on the particle surface. Therefore, this temperature is preferably 100°C or higher and further preferably 150°C or higher. On the other hand, when the temperature is 200°C or lower, the production efficiency increases. This temperature is more preferably 180°C or lower. Also, the longer the time of hydrothermal synthesis is, the more densely the particle surface is treated with silica. Therefore, the time is preferably 1 hour or more and more preferably 15 hours or more. On the other hand, when the time is 40 hours or less, the production efficiency is high. The time is more preferably 20 hours or less.

Hereinafter, a method for producing an organic solvent particles-dispersion will be described. By adding a surface treatment agent to an aqueous dispersion liquid of crystal-grown particles, the particle surface is treated with the surface treatment agent. Thereafter, the solvent of the dispersion liquid is changed from water to an organic solvent. The surface treatment agent preferably has an alkoxy group. Since the surface treatment agent having an alkoxy group can be chemically bonded to the particle surface, the particles are easily dispersed in the organic solvent.

After the surface treatment agent was added, the dispersion liquid is retained at 40°C or higher for 1 hour or more, so that the particles are quickly treated with the surface treatment agent. The retention time is preferably 20 hours or less.

By treating the particle surface in the aqueous dispersion liquid with a first surface treatment agent, the particles are less likely to aggregate in alcohol. After this treatment, the solvent is replaced to alcohol so that an alcohol dispersion liquid can be prepared. By adding the second surface treatment agent to this alcohol dispersion liquid, the particle surface can be treated with the second surface treatment agent. Thereafter, the solvent (alcohol) of the alcohol dispersion liquid is replaced with a hydrophobic solvent. When the solvent is replaced in such a step, particles are less likely to aggregate. When the added amount of the second surface treatment agent is 10 parts by mass or more relative to 100 parts by mass of the particles, the particles are easily dispersed in the hydrophobic solvent. This added amount is more preferably 20 parts by mass or more and further preferably 30 parts by mass or more. On the other hand, the added amount is preferably 50 parts by mass or less and more preferably 40 parts by mass or less relative to 100 parts by mass of the particles, in order to increase the particle concentration in the film. Also, when water or a catalyst is added during the treatment of the particle surface with the second surface treatment agent, the hydrolysis reaction of the second surface treatment agent is promoted.

A binder is added to the organic solvent particles-dispersion to obtain a coating liquid. When a part of the surface treatment agent serves as a binder, the organic solvent dispersion liquid may be used as a coating liquid.

Using the above-described coating liquid, a film is formed on a substrate to prepare a substrate with a film. Specifically, the coating liquid is applied onto a substrate and thereafter dried to form a film. Examples of the coating method include spin coating, bar coating, gravure coating, and slit coating. Drying means that a solvent is volatilized and thereby removed. When the drying temperature is 60°C or higher, the drying time is shortened. In addition, the solvent is less likely to remain in the film. Therefore, a dense film is obtained. On the other hand, when this temperature is 120°C or lower, the substrate is hardly deformed. This temperature is more preferably 100°C or lower and further preferably 80°C or lower. Also, it is preferable to cure the film after drying the coating liquid, in order to improve the production efficiency.

[Example 1]

Hereinafter, the method for producing particles will be specifically described. The preparation conditions of particles are shown in Table 1.

[Preparation of particles]

<Preparation Step>

First, a titanium-containing-compound-dispersion and a core-particles-dispersion were prepared as described below. There are mixed 523 g of a 7.66% by mass titanium tetrachloride aqueous solution in terms of $TiO_2$ and 523 g of 7.66% by mass ammonia water. In this way, a white slurry (gel) having a pH of 9.2 was prepared. The slurry was filtered. The gel was washed with pure water to obtain 400.5 g of a cake having a solid content concentration of 10% by mass. The cake was diluted with pure water to 1.5% by mass to obtain a slurry again. To this slurry, 457.7 g of 35% by mass hydrogen peroxide water was added. This dispersion liquid was heated at a temperature of 80°C for 1 hour. By adding 877 g of pure water to this dispersion liquid, the titanium-containing-compound-dispersion (titanium oxide concentration in terms of $TiO_2$: 1.0% by weight) was obtained. This dispersion liquid had a pH of 7.8 and a laser particle diameter of 37 nm. The laser particle diameter was measured by an electrophoretic light scattering method using ELSZ-2000S manufactured by Otsuka Electronics Co., Ltd. after diluting the dispersion liquid to 0.01% by weight with water. In the following Examples and Comparative Examples, all the laser particle diameters were measured at this concentration.

A cation exchange resin (manufactured by Mitsubishi Chemical Corporation) was added to 4005 g of the titanium-containing-compound-dispersion. To this dispersion liquid, 495 g of a potassium stannate aqueous solution diluted with pure water to 1% by weight was added. The ion exchange resin was separated from the dispersion liquid. This dispersion liquid was hydrothermally synthesized at 165°C for 18 hours in an autoclave to obtain 4500 g of a core-particles-dispersion.

<Mixing Step>

Next, 4500 g of the titanium-containing-compound-dispersion and 4500 g of the core-particles-dispersion were mixed to prepare a mixed solution. The laser particle diameter of the mixed liquid was 37 nm.

<Crystal growth step>

This mixed solution was hydrothermally synthesized in an autoclave to crystal-grow core particles. The hydrothermal synthesis condition was 165°C for 18 hours. The laser particle diameter of the dispersion liquid after the first crystal growth was 37 nm.

In this example, the core particles were crystal-grown twice. In the second crystal growth, the particles were crystal-grown in the same manner as in the first crystal growth except that the dispersion liquid after the first crystal growth was used as the core-particles-dispersion.

The laser particle diameter of the dispersion liquid after the second crystal growth was 43 nm. The laser particle diameters (dispersed particle diameters) of the dispersion liquids of particles for other Examples and Comparative Examples are also shown in Table 3. This dispersion liquid was concentrated using an ultrafiltration membrane device to obtain 2250 g of an aqueous particles-dispersion (solid content concentration: 4% by mass).

[Preparation of organic solvent particles-dispersion]

Hereinafter, the preparation of an organic solvent particles-dispersion will be specifically described. The preparation conditions of the dispersion liquid are shown in Table 2.

First, an alcohol particles-dispersion was prepared as described below. To 2250 g of an aqueous particles-dispersion, 2250 g of methanol and 56.3 g of ethyl orthosilicate (containing 28.8% by mass of silicon in terms of $SiO_2$) as the first surface treatment agent were added. This dispersion liquid was heated and stirred at 50°C for 18 hours to obtain a water/methanol particles-dispersion. After the dispersion liquid was cooled to room temperature, the solvent of the dispersion liquid was replaced with methanol using an ultrafiltration membrane. This dispersion liquid was concentrated to obtain 531 g of an alcohol particles-dispersion (solid content concentration: 20% by mass). The amount of water contained in this dispersion liquid was 0.3% by mass.

To 531 g of the alcohol particles-dispersion, 10.6 g of 5% by mass ammonia water was added. Further, 31.9 g of 3-methacryloxypropyltrimethoxysilane (KBM-503 manufactured by Shin-Etsu Chemical Co., Ltd., containing 24.2% by mass of silicon in terms of $SiO_2$) was added as the second surface treatment agent. This dispersion liquid was heated and stirred at 50°C for 18 hours. This dispersion liquid was cooled to room temperature. Using a rotary evaporator, the solvent of this dispersion liquid was changed from alcohol to propylene glycol monomethyl ether acetate (PGMEA) having higher hydrophobicity than alcohol. As a result, 570 g of an organic solvent particles-dispersion (solid content concentration: 20% by mass) was obtained.

[Preparation of coating liquid]

Hereinafter, the method for preparing a coating liquid will be described. The preparation conditions of the coating liquids for other Examples and Comparative Examples are also shown in Table 2. There were added and mixed 100.0 g of the organic solvent particles-dispersion, 6.0 g of Diapureste (registered trademark) ADDA (manufactured by Mitsubishi Gas Chemical Company, Inc.) as a binder, and 0.4 g of Omnirad TPO-H as a photopolymerization initiator.

The physical properties of the particles were measured by the following method. The results for other Examples and Comparative Examples are also shown in Table 3.

(1) Composition of particles

The aqueous particles-dispersion was diluted so as to have a solid concentration of 1%. A powder of the particles was obtained by drying 100 g of the aqueous dispersion liquid at 100°C for 10 minutes. The powder was placed on a burner to incinerate the organic matter. This powder, sodium peroxide, and sodium hydroxide were added to melt the powder. Furthermore, sulfuric acid and hydrochloric acid were added to the powder to melt the powder. The Sn, Ti, and Si content ratios of this solution were measured using ICP-OES (SPS5520 manufactured by SII Co. or ICPS-8100 manufactured by Shimadzu Corporation). These content ratios were converted into $SnO_2$, $TiO_2$, and $SiO_2$ content ratios of the particles, respectively.

(2) Crystal structure and crystallite diameter

The aqueous particles-dispersion was diluted so as to have a solid concentration of 1%. A measurement sample was prepared by drying 200 g of this aqueous dispersion liquid at 110°C for 20 hours (at 60°C for 48 hours only in Example 7). X-ray structural analysis measurement of the sample was performed using RINT (registered trademark) 1400 manufactured by Rigaku Corporation. The pattern of the diffraction peak was analyzed using PDXL, and it was confirmed that the crystal structure of the particles was a rutile-type. The crystallite diameter of the particles was calculated from the half width of the diffraction peak according to Scherrer's equation ($D = K \times \lambda/(\beta \times \cos\theta)$). As the diffraction peak, the rutile-type Miller indices (110) were selected. D is the crystallite size (nm), K is the Scherrer constant, $\lambda$ is the wavelength (nm) of X-ray, $\beta$ is the spread (rad) of the diffraction line width, and $\theta$ is the Bragg angle (rad).

(3) Average value of minor axes and aspect ratio

The aqueous particles-dispersion was diluted so as to have a solid concentration of 0.002%. One drop of the diluted dispersion liquid was poured on a collodion membrane. This was dried at 50°C for 10 minutes. A photograph of the particles was taken using a scanning electron microscope S-5500 (SEM) manufactured by Hitachi High-Technologies Corporation. A hundred particles projected on the photograph taken using the SEM were randomly selected, and their minor axes and major axes were measured. The average value of the minor axes and the average value of the major axes were calculated. The ratio of the average value of the minor axes to the average value of the major axes (average value of minor axes/average value of major axes) was defined as an aspect ratio.

(4) Presence or absence of detection of tin on particle surface

It can be measured by X-ray photoelectron spectroscopy (XPS) that tin oxide is not detected on the particle surface or that the core contains tin oxide. However, since the measurement is difficult to perform only with particles, a film is prepared as a measurement sample as follows. First, a dispersion liquid (coating liquid) was prepared by adding 1.1 g of diphenyl(2,4,6 trimethylbenzoyl)-phenylphosphine oxide (Omnirad (registered trademark) TPO-H manufactured by IGM Resins B.V.) as a photopolymerization initiator to 300 g of the organic solvent particles-dispersion. This dispersion liquid was applied onto a silicon wafer substrate and dried at 80°C for 2 minutes. Using a high-pressure mercury lamp (Eye UV Meter manufactured by GS Yuasa Corporation), the dried coating liquid was irradiated with UV light under the condition of 3000 $mJ/cm^2$ to prepare an XPS measurement sample (film). Measurement was performed by XPS as described below, and it was confirmed that tin oxide was not detected on the particle surface.

Since the surface treatment agent is present, titanium may not be detected on the outermost surface of the film. Therefore, the proportion of tin on the particle surface is measured by performing etching to the depth at which titanium is detected. For example, in the present embodiment, etching is performed to a depth of 1.2 nm at which titanium is detected. In the case of this depth, Ar etching is performed for 20 seconds. That is, Ar etching is performed at 0.06 nm/sec. It is determined that titanium is detected, when the proportion of titanium reaches 1.0 at% or more. This proportion is the number of atoms of titanium relative to the total number of atoms of carbon, oxygen, titanium, and tin. The detection limit of typical XPS is 0.1 at%, below which no tin is present on the particle surface. Therefore, when the proportion of tin at the depth at which titanium was detected was less than 0.1 at% (that is, when tin was not detected), it was determined that tin oxide is not present on the particle surface. In this example, this proportion was less than 0.1 at%, and thus tin was not detected on the particle surface. When tin is present in the core, tin is detected by further continuing etching (the proportion of tin becomes 0.1 at% or more).

As an X-ray photoelectron spectrometer, Escalab 220Xi manufactured by Thermo Fisher Scientific Inc. was used. Spectrum measurement was performed under the conditions of X-ray: 190 W, pass energy: wide 100 eV, narrow 20 eV, analysis diameter: 250 × 1000 $\mu$m, and charge neutralizer: on. Measurement was performed by an ion gun with Ar gass cluster ion at an acceleration voltage of 3 kV and an etching rate of 3.5 nm/min (silicon oxide film). Calibration of the binding energy for 1s (C-H) was performed at 284.8 eV The energy intensity of the peak for C1s is observed at 284 to 286 eV O1s is observed at 532 to 534 eV, Ti2p at 454 to 467 eV, and $Sn3d_5$ at 483 to 490 eV

(5) Particle refractive index Np'

The particle refractive index Np' was determined by the following method. In the following Examples and Comparative Examples, the refractive index Np' was similarly determined.

First, three levels of coating liquids (a) to (c) were prepared and thereafter each applied onto a silicon wafer (6 inch dummy wafer (P type) manufactured by Matsuzaki Seisakusho Co., Ltd., thickness: 625 $\mu$m) by a spin coating method. This coating liquid was dried at 80°C for 2 minutes. Using Eye UV Meter, the dried coating liquid was irradiated with UV light under the condition of 3000 $mJ/cm^2$ to prepare a substrate with a film (silicon wafer). The refractive index Nav' of the substrate with a film (silicon wafer) was actually measured by spectroscopic ellipsometry (SE-2000 manufactured by Semilab Japan KK).

The three levels of coating liquids (a) to (c) were prepared as follows.

(a) Preparation of coating liquid with weight ratio [particles:ADDA = 6:4]
There were mixed 60.0 g of an organic solvent particles-dispersion having a solid content concentration of 20% by mass, 8.0 g of ADDA, and 0.5 g of Omnirad TPO-H. To this mixture, 60.0 g of PGMEA was added to prepare a coating liquid (a).
(b) Preparation of coating liquid with weight ratio [particles:ADDA = 7:3]
There were mixed 70.0 g of an organic solvent particles-dispersion having a solid content concentration of 20% by mass, 6.0 g of ADDA, and 0.4 g of Omnirad TPO-H. To this mixture, 70.0 g of PGMEA was added to prepare a coating liquid (b).
(c) Preparation of coating liquid with weight ratio [particles:ADDA = 8:2]
There were mixed 80.0 g of an organic solvent particles-dispersion having a solid content concentration of 20% by mass, 4.0 g of ADDA, and 0.3 g of Omnirad TPO-H. To this mixture, 80.0 g of PGMEA was added to prepare a coating liquid (c).

Next, the film refractive index Nav (calculated value) is calculated according to Equation 1 (conversion equation of volume fraction and weight fraction) and Equation 2 (Maxwell-Garnett equation).

Equation 1

$$f(m) = \frac{\dfrac{m}{100dp}}{\dfrac{1 - \dfrac{m}{100}}{dm} + \dfrac{m}{100dp}}$$

In Equation 1, f(m) is the volume fraction of the particles relative to the total solid content. m is the weight fraction of the particles relative to the total solid content, dm is the specific gravity (here, 1.1 g/ml which is the specific gravity of ADDA) of the binder, and dp is the specific gravity of the particles. The specific gravity dp is the sum of the products of the content ratio and the specific gravity of respective components contained in the particles. Specific gravities dp of the components $TiO_2$, $SiO_2$, and $SnO_2$ contained in the particles were set to 4.3 (3.8 g/ml only in Comparative Example 4 which is an anatase type), 2.2, and 7.0 g/ml, respectively. The content ratio of each component is a value obtained by dividing the content ratio (% by mass) obtained in (1) Composition of particles by 100.

Equation 2

$$Nav = \sqrt{Nm^2 \left( 1 + \frac{3 \cdot f(m) \cdot \left( \dfrac{Np^2 - Nm^2}{Np^2 + 2 \cdot Nm^2} \right)}{1 - f(m) \cdot \left( \dfrac{Np^2 - Nm^2}{Np^2 + 2 \cdot Nm^2} \right)} \right)}$$

In Equation 2, Nav is the film refractive index, Nm is the refractive index (here, 1.7 which is the refractive index of ADDA ) of the binder, and Np is the particle refractive index.

The weight fraction m of the particles, the specific gravity dm of the binder, and the specific gravity dp of the particles in the coating liquids (a) to (c) were substituted into Equation 1. Since there are weight fractions m for three levels (a) to (c), f(m) was obtained for three levels. The value in increments of 0.01 in the range of 1.70 to 2.70 was substituted for the particle refractive index Np of Equation 2 to calculate the film refractive index Nav. At f(m) for each of three levels, the film refractive indices Nav were calculated. The deviations $\sigma$ (Nav - Nav') between each of the film refractive indices Nav (calculated value) and film refractive indices Nav' (measured value) were obtained. From these deviations, the squared deviations $\sigma^2$ and the sum $\Sigma\sigma^2$ of squared deviations were calculated. The particle refractive index Np at which the sum $\Sigma\sigma^2$ of square deviations is the minimum value was defined as the particle refractive index Np'. That is, the particle refractive index Np' was determined by the least squares method. The particle refractive index Np' determined by this method involves factors such as the affinity of the particles for the binder in the film, the particle diameter, the shape of the particles, and the properties of the particle surface (the amount of the surface treatment agent, the composition and structure of the particle surface, and others).

[Preparation of substrate with film]

As described below, a film was formed on each of a glass substrate and a silicon wafer using a coating liquid to prepare a substrate with a film (glass substrate) and a substrate with a film (silicon wafer). Using a haze meter (NDH-5000 manufactured by Nippon Denshoku Industries Co., Ltd.), the total light transmittance and the haze of the substrate with a film (glass substrate) were measured. Also, the refractive index and the film thickness of the substrate with a film (silicon wafer) were evaluated by spectroscopic ellipsometry (SE-2000 manufactured by Semilab Japan KK). The measurement and evaluation results for other Examples and Comparative Examples are also shown in Table 3.

(Preparation of substrate with film (glass substrate))

The coating liquid was applied on a glass substrate (FL glass manufactured by Hamashin Co., thickness: 3 mm, refractive index: 1.51) by a spin coating method. After dried at 80°C for 2 minutes, the film was irradiated with UV light under the condition of 3000 mJ/cm$^2$ using a high-pressure mercury lamp (Eye UV Meter manufactured by GS Yuasa Corporation) to prepare a substrate with a film (glass substrate). An uncoated glass substrate had a total light transmittance of 99.0% and a haze of 0.1%.

(Preparation of substrate with film (silicon wafer))

The coating liquid was applied on a silicon wafer (6 inch dummy wafer (P type) manufactured by Matsuzaki Seisakusho Co., Ltd., thickness: 625 $\mu$m) by a spin coating method. After dried at 80°C for 2 minutes, the film was irradiated with UV light under the condition of 3000 mJ/cm$^2$ using Eye UV Meter to prepare a substrate with a film (silicon wafer).

[Example 2]

The dispersion liquid after the first crystal growth of Example 1 was concentrated using an ultrafiltration membrane device to obtain 2250 g of an aqueous particles-dispersion (solid content concentration: 4% by mass). An alcohol particles-dispersion (solid content concentration: 20% by mass) was obtained in the same manner as in Example 1 except that 2250 g of methanol and 75 g of ethyl orthosilicate were added to 2250 g of this aqueous particles-dispersion in the preparation of the organic solvent particles-dispersion. To this alcohol dispersion liquid, 11.2 g of 5% by mass ammonia water was added. Furthermore, 33.5 g of KBM-503 as the second surface treatment agent was added to this alcohol dispersion liquid. After the addition of KBM-503, an organic solvent particles-dispersion (solid content concentration: 20% by mass) was obtained in the same manner as in Example 1. A coating liquid was prepared in the same manner as in Example 1 except that this organic solvent dispersion liquid was used in the preparation of the coating liquid.

[Example 3]

Crystal growth was performed in the same manner as in Example 1 except that crystal growth was performed five time in the crystal growth step. In the (n + 1)th crystal growth, the dispersion liquid after the nth crystal growth was used as the core-particles-dispersion. Otherwise, crystal growth was performed in the same manner as in the first crystal growth (where n is 1 to 4). The dispersion liquid after the fifth crystal growth was concentrated using an ultrafiltration membrane device to obtain 2250 g of an aqueous particles-dispersion (solid content concentration: 4% by mass). An alcohol particles-dispersion (solid content concentration: 20% by mass) was obtained in the same manner as in Example 1 except that 2250 g of methanol and 37.5 g of ethyl orthosilicate were added to 2250 g of this aqueous particles-dispersion in the preparation of the organic solvent particles-dispersion. To this alcohol dispersion liquid, 10.1 g of 5% by mass ammonia water was added. Furthermore, 30.2 g of KBM-503 as the second surface treatment agent was added to this alcohol dispersion liquid. After the addition of KBM-503, an organic solvent particles-dispersion (solid content concentration: 20% by mass) was obtained in the same manner as in Example 1. A coating liquid was prepared in the same manner as in Example 1 except that this organic solvent dispersion liquid was used in the preparation of the coating liquid.

[Example 4]

Core particles were crystal-grown in the same manner as in Example 1 except that the amount of the titanium-containing-compound-dispersion was changed to 7716 g, and the amount of the core-particles-dispersion was changed to 1286 g in the mixing step. Crystal growth was performed once. This dispersion liquid was concentrated using an ultrafiltration membrane device to obtain 2250 g of an aqueous particles-dispersion (solid content concentration: 4% by mass). A coating liquid was prepared in the same manner as in Example 1 except that this aqueous dispersion liquid was used in the preparation of the organic solvent particles-dispersion.

[Example 5]

In the preparation of the organic solvent particles-dispersion, the added amount of ethyl orthosilicate was set to 43.8 g, the added amount of ammonia water was set to 10.3 g, and the added amount of KBM-503 was set to 30.8. Otherwise, a coating liquid was prepared in the same manner as in Example 1.

[Example 6]

The aqueous particles-dispersion in Example 1 was diluted so as to have a solid content concentration of 1% by mass. To 9000 g of this aqueous dispersion liquid, 36 g of silica sol (Cataloid (registered trademark) SN-350 manufactured by JGC Catalysts and Chemicals Ltd., specific surface area of silica: 375 $m^2$/g, silica content: 15% by weight) was added. This dispersion liquid was hydrothermally synthesized at 165°C for 18 hours using an autoclave. This dispersion liquid was cooled to room temperature. This dispersion liquid was concentrated using an ultrafiltration membrane device to obtain 2385 g of an aqueous particles-dispersion (solid content concentration: 4% by mass). That is, the particles were surface-treated with silica. An alcohol particles-dispersion (solid content concentration: 20% by mass) was obtained in the same manner as in Example 1 except that 2250 g of methanol and 19.9 g of ethyl orthosilicate were added to 2250 g of this aqueous particles-dispersion in the preparation of the organic solvent particles-dispersion. To this alcohol dispersion liquid, 10.1 g of 5% by mass ammonia water was added. Furthermore, 30.1 g of KBM-503 as the second surface treatment agent was added to this alcohol dispersion liquid. After the addition of KBM-503, an organic solvent particles-dispersion (solid content concentration: 20% by mass) was obtained in the same manner as in Example 1. A coating liquid was prepared in the same manner as in Example 1 except that this organic solvent dispersion liquid was used in the preparation of the coating liquid. Also, an XPS measurement sample was prepared with particles before the surface treatment with silica. That is, the same XPS measurement sample as in Example 1 was used.

The isoelectric point of the aqueous particles-dispersion obtained in this Example was measured as follows. Using a zeta potential measuring apparatus ("Zetasizer Nano-ZS" manufactured by Malvern Instruments Ltd.), zeta potential measurement at each pH was performed while adjusting the pH at intervals of within pH 1. When two points sandwiching a zeta potential of ±0 mV were connected by a straight line, the pH at which the zeta potential was ±0 mV on the straight line was defined as an isoelectric point. In this measurement, the concentration of the particles to be measured was set to 0.25% by mass, and pure water was used for dilution. For pH adjustment, an automatic titrator ("MPT-2" manufactured by Malvern Instruments Ltd.) was used. A 0.1 M sodium hydroxide aqueous solution was used when increasing the pH, and 0.1 M hydrochloric acid was used when decreasing the pH. The isoelectric point was 2.3.

[Example 7]

In the crystal growth step, the core particles were crystal-grown by heating and stirring at 90°C for 40 hours while refluxing, instead of by performing hydrothermal synthesis. Otherwise, a coating liquid was prepared in the same manner as in Example 1.

[Comparative Example 1]

The core-particles-dispersion in Example 1 was concentrated using an ultrafiltration membrane device to obtain 1125 g of an aqueous particles-dispersion (solid content concentration: 4% by mass). To this aqueous dispersion liquid, 1125 g of methanol and 28.2 g of ethyl orthosilicate (manufactured by Tama Chemicals Co., Ltd., containing 28.8% by mass of silicon in terms of $SiO_2$) were added. When this aqueous dispersion liquid was heated at 50°C, the viscosity of the dispersion liquid increased, and the dispersion liquid became cloudy.

[Comparative Example 2]

The mixed liquid of Example 1 was stirred at 60°C for 40 hours to obtain an aqueous particles-dispersion. This aqueous dispersion liquid was light yellow in color. The particles in the aqueous dispersion liquid were mixed crystals of rutile and anatase.

[Comparative Example 3]

There were mixed 2250 g of a titanium tetrachloride aqueous solution having a concentration of 2% by weight in terms of $TiO_2$ and 880 g of 15% by weight ammonia water. In this way, a white slurry (gel) having a pH of 8.6 was prepared. After filtering this slurry, the gel was washed with pure water. As a result, 900 g of a cake having a solid content concentration of 5% by weight was obtained. To 900 g of the cake, 514 g of 35% by weight hydrogen peroxide water and 2100 g of pure water were added. The product was heated at 80°C for 1 hour. Further, 986 g of pure water was added thereto. To 4500 g of this dispersion liquid, 48.8 g of Cataloid SN-350 and 683.8 g of pure water were added. This dispersion liquid was hydrothermally synthesized at 165°C for 18 hours in an autoclave to obtain 5232.6 g of a core-particles-dispersion. To 4500 g of this dispersion liquid, 4500 g of the titanium-containing-compound-dispersion in Example 1 was added. This dispersion liquid was hydrothermally synthesized at 165°C for 18 hours using an autoclave. The dispersion liquid after hydrothermal synthesis had a laser particle diameter of 400 nm and was cloudy.

[Comparative Example 4]

The core-particles-dispersion obtained in Comparative Example 3 was concentrated using an ultrafiltration membrane device to obtain an aqueous particles-dispersion (solid content concentration: 10% by weight). Dealkalization was performed by adding a cation exchange resin to this aqueous dispersion liquid. The ion exchange resin was separated from the aqueous dispersion liquid. An alcohol particles-dispersion (solid content concentration: 20% by mass) was obtained in the same manner as in Example 1 except that 2250 g of methanol and 65.5 g of ethyl orthosilicate were added to 2250 g of this aqueous dispersion liquid in the preparation of the organic solvent particles-dispersion. To this alcohol dispersion liquid, 12.4 g of 5% by mass ammonia water was added. Furthermore, 77.3 g of KBM-503 as the second surface treatment agent was added to this alcohol dispersion liquid. After the addition of KBM-503, an organic solvent particles-dispersion (solid content concentration: 20% by mass) was obtained in the same manner as in Example 1. A coating liquid was prepared in the same manner as in Example 1 except that this organic solvent dispersion liquid was used in the preparation of the coating liquid.

[Comparative Example 5]

There were mixed 2000 g of a titanium tetrachloride aqueous solution having a concentration of 7.5% by weight in terms of TiO$_2$ and 2000 g of 7.5% by weight ammonia water. In this way, a white slurry (gel) having a pH of 9.2 was prepared. After filtering this slurry, the gel was washed with pure water. As a result, 1500 g of a cake having a solid content of 10% by weight was obtained. With pure water, 1500 g of this cake was diluted to 1.5% by weight. To the diluted cake, 1714 g of 35% by weight hydrogen peroxide water was added. The product was heated at 80°C for 1 hour. The titanium-containing-compound-dispersion was obtained by adding 3286 g of pure water to this product. The pH of this aqueous solution was 7.8. A dealkalization treatment was performed by adding a cation exchange resin to 15000 g of this dispersion liquid. A 1% by weight potassium stannate aqueous solution was added to 1901 g of the dispersion liquid. The ion exchange resin was separated from the dispersion liquid. To this dispersion liquid, 634 g of Cataloid SN-350 and 3591 g of pure water were added. This dispersion liquid was hydrothermally synthesized at 165°C for 18 hours using an autoclave. This dispersion liquid was concentrated using an ultrafiltration membrane device. Dealkalization was performed by adding a cation exchange resin to 2641 g of this dispersion liquid. The ion exchange resin was separated from the dispersion liquid to prepare an aqueous particles-dispersion. The laser particle diameter of this aqueous dispersion liquid was 15 nm. An alcohol particles-dispersion (solid content concentration: 20% by mass) was obtained in the same manner as in Example 1 except that 2250 g of methanol and 165.1 g of ethyl orthosilicate were added to 2250 g of this aqueous dispersion liquid in the preparation of the organic solvent particles-dispersion. To this alcohol dispersion liquid, 31.2 g of 5% by mass ammonia water was added. Furthermore, 93.9 g of KBM-503 as the second surface treatment agent was added to this alcohol dispersion liquid. After the addition of KBM-503, an organic solvent particles-dispersion (solid content concentration: 20% by mass) was obtained in the same manner as in Example 1. A coating liquid was prepared in the same manner as in Example 1 except that this organic solvent dispersion liquid was used in the preparation of the coating liquid.

[Table 1]

| | | Preparation conditions of particles | | | | | |
|---|---|---|---|---|---|---|---|
| | | Composition of core particles | | | wt%* (titanium-containing compound /core particles) | Crystal growth temperature [°C] | Number of crystal growths |
| | Crystal structure of core particles | TiO$_2$ content ratio [mass%] | SnO$_2$ content ratio [mass%] | SiO$_2$ content ratio [mass%] | | | |
| Example 1 | Rutile | 89 | 11 | 0 | 1 | 165 | 2 |
| Example 2 | Rutile | 89 | 11 | 0 | 1 | 165 | 1 |
| Example 3 | Rutile | 89 | 11 | 0 | 1 | 165 | 5 |
| Example 4 | Rutile | 89 | 11 | 0 | 6 | 165 | 1 |
| Example 5 | Rutile | 89 | 11 | 0 | 1 | 165 | 2 |
| Example 6 | Rutile | 89 | 11 | 0 | 1 | 165 | 2 |
| Example 7 | Rutile | 89 | 11 | 0 | 1 | 90 | 2 |
| Comparative Example 1 | Rutile | - | - | - | - | - | 0 |
| Comparative Example 2 | Rutile | 89 | 11 | 0 | 1 | 60 | 1 |
| Comparative Example 3 | Anatase | 86 | 0 | 14 | 1 | 165 | 1 |
| Comparative Example 4 | Anatase | - | - | - | - | - | 0 |
| Comparative Example 5 | Rutile | - | - | - | - | - | 0 |
| * Weight ratio per one crystal growth | | | | | | | |

[Table 2]

| | Preparation conditions of organic solvent particles-dispersion | | | Preparation conditions of coating liquid |
|---|---|---|---|---|
| | Silica | First surface treatment agent | Second surface treatment agent | Binder |
| | SN-350 | TEOS | KBM-503 | ADDA |
| | Added amount [parts by mass (relative to 100 parts by mass of particles)] | | | |
| Example 1 | - | 62.5 | 35.5 | 38.0 |
| Example 2 | - | 83.3 | 37.1 | 39.9 |
| Example 3 | - | 41.7 | 33.5 | 36.0 |
| Example 4 | - | 62.5 | 35.5 | 38.0 |
| Example 5 | - | 48.6 | 34.3 | 36.7 |
| Example 6 | 6 | 22.2 | 33.5 | 36.2 |
| Example 7 | - | 62.5 | 35.5 | 38.0 |
| Comparative Example 1 | - | 62.5 | - | - |
| Comparative Example 2 | - | - | - | - |
| Comparative Example 3 | - | - | - | - |
| Comparative Example 4 | - | 62.5 | 35.5 | 38.0 |
| Comparative Example 5 | - | 62.5 | 35.5 | 38.0 |
| SN-350: Cataloid SN-350 (silica sol) manufactured by JGC Catalysts and Chemicals Ltd.<br>TEOS: ethyl orthosilicate manufactured by Tama Chemicals Co., Ltd.<br>KBM-503: KBM-503 (3-methacryloxypropyltrimethoxysilane) manufactured by Shin-Etsu Chemical Co., Ltd. ADDA: Diapureste ADDA manufactured by Mitsubishi Gas Chemical Company, Inc. | | | | |

[Table 3]

| | | | Properties of particles | | | | | | | | Evaluation results of substrate with coating film | | | |
| | Crystal structure | Crystallite diameter [nm] | Composition | | | Presence or absence of tin detection (particle surface) | Ratio: average of minor axes /crystallite diameter | Aspect ratio | Dispersed particle diameter [nm] | Refractive index | Haze [%] | Total light transmittance [%] | Refractive index @550 nm | Thickness [nm] |
| | | | TiO$_2$ content ratio [mass%] | SnO$_2$ content ratio [mass%] | SiO$_2$ content ratio [mass%] | | | | | | | | | |
|---|---|---|---|---|---|---|---|---|---|---|---|---|---|---|
| **Example 1** | Rutile | 13 | 97 | 3 | 0 | Absence | 1.4 | 1.7 | 43 | 2.2 | 0.4 | 89.2 | 1.90 | 220 |
| **Example 2** | Rutile | 9 | 94 | 6 | 0 | Absence | 1.7 | 2.0 | 37 | 2.1 | 0.4 | 87.5 | 1.86 | 230 |
| **Example 3** | Rutile | 23 | 99.7 | 0.3 | 0 | Absence | 1.3 | 1.2 | 70 | 2.3 | 0.9 | 83.4 | 1.95 | 238 |
| **Example 4** | Rutile | 12 | 98 | 2 | 0 | Absence | 1.4 | 1.9 | 42 | 2.2 | 0.5 | 88.2 | 1.89 | 222 |
| **Example 5** | Rutile | 13 | 97 | 3 | 0 | Absence | 1.4 | 1.7 | 43 | 2.2 | 0.8 | 84.7 | 1.93 | 222 |
| **Example 6** | Rutile | 13 | 97 | 3 | 0 | Absence | 1.4 | 1.7 | 43 | 2.3 | 0.5 | 88.5 | 1.95 | 240 |
| **Example 7** | Rutile | 9 | 97 | 3 | 0 | Absence | 1.4 | 2.0 | 37 | 2.2 | 0.4 | 89.0 | 1.89 | 220 |
| **Comparative Example 1** | Rutile | 6 | 89 | 11 | 0 | Presence | - | - | - | - | - | - | - | - |
| **Comparative Example 2** | Mixed crystals | - | - | - | - | - | - | - | - | - | - | - | - | - |
| **Comparative Example 3** | Anatase | - | - | - | - | - | - | - | - | - | - | - | - | - |
| **Comparative Example 4** | Anatase | 6 | 86 | 0 | 14 | - | 17 | 1.4 | 14 | 2.0 | 0.4 | 86.8 | 1.79 | 220 |
| **Comparative Example 5** | Rutile | 6 | 71 | 9 | 20 | Presence | 15 | 2.2 | 15 | 1.9 | 0.4 | 86.3 | 1.74 | 222 |

EP 4 317 070 A1

**EP 4 317 070 A1**

**Claims**

1. Particles having a rutile-type crystal structure, comprising:

   90% by weight or more of titanium oxide in terms of $TiO_2$; and
   0.2 to 10% by weight of tin oxide in terms of $SnO_2$,
   wherein a crystallite diameter is 7 nm or more.

2. The particles according to claim 1, wherein tin is not detected on surfaces of the particles.

3. The particles according to claim 1 or 2, wherein when the particles are dispersed in a solvent, the particles have an average particle diameter of 100 nm or less.

4. A particles-dispersion comprising:

   particles having a rutile-type crystal structure; and
   a solvent, wherein
   the particles contain 90% by weight or more of titanium oxide in terms of $TiO_2$ and 0.2 to 10% by weight of tin oxide in terms of $SnO_2$,
   the particles have a crystallite diameter of 7 nm or more, and
   the particles have an average particle diameter of 100 nm or less.

5. The dispersion liquid according to claim 4, wherein

   the solvent is water,
   the particles contain silica in an amount of 2 parts by mass or more in terms of $SiO_2$ relative to 100 parts by mass of the particles, and
   the dispersion liquid has an isoelectric point of 3 or less.

6. A method for producing particles, sequentially comprising:

   a step of preparing a titanium-containing-compound-dispersion and a core-particles-dispersion having a rutile-type crystal structure;
   a step of mixing the titanium-containing-compound-dispersion and the core-particles-dispersion to prepare a mixed liquid; and
   a step of growing crystals from the core particles by adjusting the mixed liquid to 80°C or higher,
   wherein the core particles contain titanium oxide and tin oxide.

7. The method for producing particles according to claim 6, sequentially comprising:

   a step of adding silica to the dispersion liquid after the step of growing crystals from the core particles; and
   a step of hydrothermally synthesizing the dispersion liquid to which the silica was added.

8. A coating liquid comprising the particles according to claim 1 or particles obtained by the production method according to claim 6.

9. A method for producing a substrate with a film, comprising forming a film on a substrate with the coating liquid according to claim 8.

**Amended claims under Art. 19.1 PCT**

1. Particles having a rutile-type crystal structure, comprising:

   a core including tin and titanium; and
   a shell including titanium, wherein a crystallite diameter of the particles is 7 nm or more,
   the particles contain 90% by weight or more titanium oxide in terms of $TiO_2$,
   the particles contain 0.2 to 10% by weight tin oxide in terms of $SnO_2$,

a proportion of tin in the core is 0.1-6.5 at%; and
a proportion of tin in the shell is less than 0.1 at%.

2. A particles-dispersion comprising:

the particles according to claim 1; and
a solvent, wherein

the particles have an average particle diameter of 100 nm or less.

3. The particles dispersion according to claim 2, wherein

the solvent is water,
the particles contain silica in an amount of 2 parts by mass or more in terms of $SiO_2$ relative to 100 parts by mass of the particles, and
the particles dispersion has an isoelectric point of 3 or less.

4. A method for producing particles, comprising:

a step of preparing a titanium-containing-compound-dispersion;
a step of preparing core-particles-dispersion containing core particles, the core particles having a rutile-type crystal structure and the core particles including titanium oxide and tin oxide;
a mixing step of mixing the titanium-containing-compound-dispersion and the core-particles-dispersion to prepare a mixed liquid; and
a step of adjusting the mixed liquid to 80°C or higher,
wherein the titanium-containing-compound-dispersion and the core-particles-dispersion are mixed in the mixing step so that the particles contain 95% by weight or more of titanium oxide in terms of $TiO_2$ and 0.2 to 5% by weight of tin oxide in terms of $SnO_2$.

5. The method for producing particles according to claim 4, sequentially comprising:

a step of adding silica to the dispersion liquid after the step of growing crystals from the core particles; and
a step of hydrothermally synthesizing the dispersion liquid to which the silica was added.

6. A coating liquid comprising the particles according to claim 1.

7. A method for producing a substrate with a film, comprising forming a film on a substrate with the coating liquid according to claim 6.

## INTERNATIONAL SEARCH REPORT

International application No.

**PCT/JP2022/016293**

### A. CLASSIFICATION OF SUBJECT MATTER

***C01G 23/053***(2006.01)i; ***C09C 1/36***(2006.01)i; ***C09C 3/06***(2006.01)i; ***C09D 4/00***(2006.01)i; ***C09D 17/00***(2006.01)i; ***C09D 7/61***(2018.01)i
FI: C01G23/053; C09C1/36; C09C3/06; C09D4/00; C09D7/61; C09D17/00

According to International Patent Classification (IPC) or to both national classification and IPC

### B. FIELDS SEARCHED

Minimum documentation searched (classification system followed by classification symbols)

C01G23/053; C09C1/36; C09C3/06; C09D4/00; C09D17/00; C09D7/61

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 02-255532 A (CATALYSTS & CHEM IND CO LTD) 16 October 1990 (1990-10-16) claim 1, p. 3, lower left column, lines 8-20, p. 4, upper right column, lines 1-10, example 3, table 1 | 1-2, 6, 8-9 |
| Y | | 7 |
| A | | 3-5 |
| X | JP 2007-197278 A (MITSUI CHEMICALS INC) 09 August 2007 (2007-08-09) claims 1-4, example 1, paragraph [0090] | 1-5, 8-9 |
| A | | 6-7 |
| X | JP 2012-056816 A (JGC CATALYSTS & CHEMICALS LTD) 22 March 2012 (2012-03-22) claims 1-2, 6, 14-22, example 1 | 1-5, 8-9 |
| Y | example 5 | 7 |
| A | | 6 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **23 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/016293**

| Patent document cited in search report | | | Publication date (day/month/year) | Patent family member(s) | Publication date (day/month/year) |
|---|---|---|---|---|---|
| JP | 02-255532 | A | 16 October 1990 | (Family: none) | |
| JP | 2007-197278 | A | 09 August 2007 | (Family: none) | |
| JP | 2012-056816 | A | 22 March 2012 | US 2012/0065312 A1 claims 1-2, 6, 14-22, examples 1, 5 EP 2428491 A1 CN 102433041 A KR 10-2012-0026985 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010042947 A

- WO 2018181241 A